(19) Europäisches Patentamt / European Patent Office / Office européen des brevets

(11) **EP 4 333 247 A1**

(12) **EUROPEAN PATENT APPLICATION**
published in accordance with Art. 153(4) EPC

(43) Date of publication:
**06.03.2024 Bulletin 2024/10**

(21) Application number: **22901564.9**

(22) Date of filing: **14.10.2022**

(51) International Patent Classification (IPC):
*H02J 7/00* (2006.01)     *H02J 3/32* (2006.01)
*H02M 3/335* (2006.01)

(52) Cooperative Patent Classification (CPC):
**H02J 3/32; H02J 7/00; H02M 3/335**

(86) International application number:
**PCT/KR2022/015583**

(87) International publication number:
**WO 2023/101204 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.12.2021 KR 20210171671**

(71) Applicant: **LG Energy Solution, Ltd.**
**Seoul 07335 (KR)**

(72) Inventors:
• **LEE, Daewoo**
  **Daejeon 34122 (KR)**
• **PARK, Mi So**
  **Daejeon 34122 (KR)**

(74) Representative: **Plasseraud IP**
**66, rue de la Chaussée d'Antin**
**75440 Paris Cedex 09 (FR)**

(54) **POWER CONVERSION DEVICE FOR PERFORMING DC-DC CONVERSION, AND ENERGY STORAGE SYSTEM INCLUDING SAME**

(57) A power converting apparatus performing DC/DC conversion and an energy storage system including the same may comprise: a set of batteries; and a DC/DC converter including an input connected to an output of the set of batteries, wherein a positive output terminal of the DC/DC converter is connected to a load, wherein a negative output terminal of the DC/DC converter is connected to a positive terminal of the set of batteries, and wherein a negative terminal of the set of batteries is connected to the load, thereby receiving at least a portion of the power required by the load directly from the battery without passing through the DC/DC converter. Thus, compared to a conventional DC/DC converter that acquires all the power required by the load from the battery and converts it through DC/DC conversion, the embodiments of the present invention, by which the voltage level to be boosted is lowered and power conversion efficiency increases, provides a high-efficiency and low-cost power converting apparatus with reduced volume and reduced cost and an energy storage system including the same because no additional configuration is required for power conversion efficiency.

[Figure 3]

EP 4 333 247 A1

**Description**

[Technical Field]

This application claims priority to and the benefit of Korean Patent Application No.10-2021-0171671 filed in the Korean Intellectual Property Office on December 03, 2021, the entire contents of which are incorporated herein by reference.

The present invention relates to a power converting apparatus performing DC/DC conversion and an anergy storage system including the same, and more particularly, a power converting apparatus performing DC/DC conversion on an input voltage from a battery, the apparatus located between a set of batteries and a load, and an anergy storage system including the same.

[Background Art]

Recently, as the spread of smart grid and renewable energy is expanding and the efficiency and the stability of the power system are emphasized, a demand for energy storage systems for power supply and demand control and power quality improvement is increasing.

An energy storage system relates to renewable energy, a battery that stores electric energy, and a power grid.

In general, an energy storage system may include a battery section with a plurality of batteries, a battery management system (BMS), a DC/DC converter, a power conversion system (PCS) including a DC/AC converter, and an energy management system (EMS).

Depending on a purpose of use, energy storage systems may have different output and capacity. In order to configure a large-capacity energy storage system, a plurality of battery systems may be connected. When a plurality of battery modules are connected in parallel, a current imbalance occurs due to a voltage deviation between the modules, and thus, a power conversion device is required to control the current imbalance.

Among them, a DC/DC converter in the power converter boosts a voltage input from a battery to a voltage level required by a load side in a battery discharge mode and supplies it to the load side.

However, in general, since a voltage level required by a load side is relatively higher than an input voltage of the battery, power conversion efficiency of the DC/DC converter is degraded.

[Detailed Description of the Invention]

[Technical Problem]

In order to solve the problem, an object of the present invention is to provide a power converting apparatus that performs DC/DC conversion with high convenience, high efficiency and low cost using a compact DC/DC converter.

In order to solve the problem, other object of the present invention is to provide an energy storage system including a power converting apparatus with high convenience, high efficiency and low cost using a compact DC/DC converter.

[Technical Solution]

In order to achieve the objective of the present disclosure, a power converting apparatus may comprise: a set of batteries; and a DC/DC converter including an input connected to an output of the set of batteries, wherein a positive output terminal of the DC/DC converter is connected to a load, wherein a negative output terminal of the DC/DC converter is connected to a positive terminal of the set of batteries, and wherein a negative terminal of the set of batteries is connected to the load.

The sum of a first output of the DC/DC converter and a second output of the set of batteries may be input to the load.

The sum of the first output and the second output may be equal to a target power required by the load.

The DC/DC converter may be configured to DC/DC convert a voltage input from the set of batteries and boost it to a target voltage level to obtain the first output.

The power converting apparatus further comprises a capacitor connected to the output of the DC/DC converter to accumulate at least one charge flowing in the DC/DC converter.

A battery included in the set of batteries may include any one of a battery pack, a battery rack, and a battery cell.

The load may be a power conversion system (PCS).

The power converting apparatus may be included in an energy storage system.

According to another embodiment of the present disclosure, an energy storage system may comprise: a power converting apparatus including a set of batteries and a DC/DC converter including an input connected to an output of the set of battery; and a power conversion system connected to the power converting apparatus and a load and configured to convert a DC output from the power converting apparatus into an AC output in accordance with the load, wherein a positive output terminal of the DC/DC converter is connected to the load, wherein a negative output terminal of the DC/DC converter is connected to a positive terminal of the set of batteries, and wherein a negative terminal of the set of battery is connected to the load.

[Advantageous Effects]

According to embodiments of the present disclosure, a power converting apparatus performing DC/DC conversion and an energy storage system including the same may comprise: a set of batteries; and a DC/DC converter including an input connected to an output of the battery, wherein a positive output terminal of the DC/DC converter is connected to a load, wherein a negative output terminal of the DC/DC converter is connected to a positive terminal of the set of batteries, and wherein a negative terminal of the battery is connected to the load, thereby receiving at least a portion of the power required by the load directly from the battery without passing through the DC/DC converter. Thus, compared to a conventional DC/DC converter that acquires all the power required by the load from the battery and converts it through DC/DC conversion, the embodiments of the present invention, by which the voltage level to be boosted is lowered and power conversion efficiency increases, provides a high-efficiency and low-cost power converting apparatus with reduced volume and reduced cost and an energy storage system including the same because no additional configuration is required for power conversion efficiency.

[Brief Description of the Drawings]

FIG. 1 is a block diagram of an energy storage system to which the present invention may be applied.
FIG. 2 is a circuit diagram of a typical DC/DC converter.
FIG. 3 is a circuit diagram of a power converting apparatus according to embodiments of the present invention.
FIG. 4 is a graph comparing DC/DC conversion losses of battery output powers between a power converting apparatus according to the experimental example of the present invention and the conventional DC/DC converter.
FIG. 5 is a graph comparing the DC/DC conversion losses of battery output voltages according to a power converter according to an experimental example of the present invention and a conventional DC/DC converter.

10, 100: battery 30, 300: DC/DC converter
500: capacitor P: power converting apparatus
R: Load S1: 1st connection
S2: 2nd connection

[Best Mode]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.
It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.
It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.
Terms used in the present application are used only to describe specific embodiments, and are not intended to limit the present invention. A singular form includes a plural form if there is no clearly opposite meaning in the context. In the present application, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

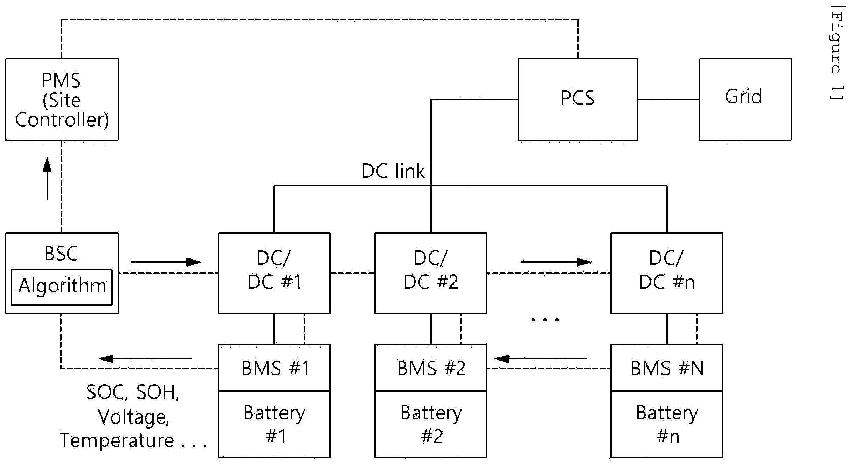

FIG. 1 is a block diagram of an energy storage system to which the present invention may be applied.

Referring to FIG. 1, in an energy storage system (ESS), a battery is used for storing energy. Typycally, multiple battery modules may form a battery rack and multiple battery racks form a battery bank. Here, depending on a device or a system in which the battery is used, a battery rack may be referred to as a battery pack. Battery #1, battery #2, ... , and battery #N shown in FIG. 1 may be a battery pack or a battery rack.

Here, a battery management system (BMS) may be installed for each battery. The BMS may monitor a current, a voltage and a temperature of each battery pack (or rack) to be managed, calculate a Status Of Charge (SOC) of the battery based on a monitoring result to control charging and discharging.

A battery section controller (BSC) may be located in each battery section which includes a plurality of batteries, peripheral circuits, and devices. The battery section controller may monitor and control objects such as a voltage, a current, a temperature, and a circuit breaker in the battery section.

A power conversion system (PCS) installed in each battery section may control power supplied from the outside and power supplied from the battery section to the outside, therby controlling charging and discharging of the battery and may include a DC/AC inverter.

An intput of the power conversion system may be connected to the DC/DC converter and an ouput of the power conversion system may be connected to a power grid

Here, the DC/DC converter may be a device that boosts a DC voltage input from the battery and provided as a bidirectional converter.

According to an embodiment, when power conversion is performed from the battery to the PCS, the input of the DC/DC converter may be connected to the battery and the output of the DC/DC converter may be connected to the load. For example, in the energy storage system of FIG. 1, battery #1 is connected to DC/DC converter #1, battery #2 is connected to DC/DC converter #2, and battery #N is connected to DC/DC #N. The output of the DC/DC converter corresponding to each battery is connected to the PCS 400 through a DC link.

Meanwhile, in a discharge mode, the DC/DC converter may DC/DC convert power stored in the battery to a voltage level required by the PCS, i.e., a DC link voltage, and output the converted power.

In addition, in a charge mode, the DC/DC converter may convert power output from the PCS into a voltage level required by the battery, i.e., a charging voltage.

In the following, a more detailed description of a conventional DC/DC converter that performs a typical DC/DC conversion will be presented.

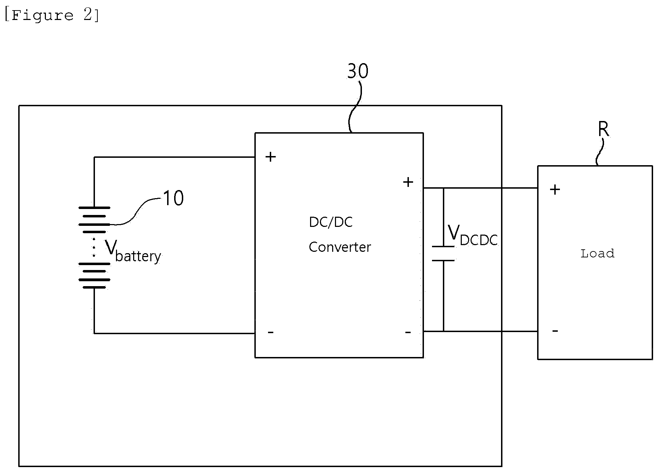

FIG. 2 is a circuit diagram of a typical DC/DC converter.

Referring to FIG. 2, a typical DC/DC converter 30 used in an energy storage system may have an input terminal connected to a battery 10 and an output terminal connected to a load R. Here, the load R may be a power conversion system (PCS).

For example, when power conversion from the battery 10 to the load R is performed, i.e., when the battery 10 is in a discharge mode, the typical DC/DC converter 30 may boost the input voltage $V_{battery}$ output from the battery 10 to a specific voltage level ($V_{DCDC}$) required by the load R as Equation 1 in the following. Accordingly, the DC/DC converter 30 may transfer the output power ($P_{output}$) increased by boosting the input voltage to the load R.

[Equation 1]

$$P_{Input} : V_{battery} \times I$$

$$P_{Output} : V_{DCDC} \times I$$

Here, $P_{Input}$ is an input of the typical DC/DC converter 30, $P_{Output}$ is an output of the typical DC/DC converter 30, $V_{battery}$ is a first voltage that is an input of the battery 10, and $V_{DCDC}$ is a second voltage which is a boosted output voltage by the typical DC/DC converter 30.

However, in general, the load R requires a high voltage of 400V or more as an input voltage. Accordingly, power loss may occur during output since a typical DC/DC converter 30 needs to perform high-capacity DC/DC conversion when converting power received from the battery 10 and thus, power conversion efficiency may decrease. In order to solve this problem, recently, a high-spec component has been added to a typical DC/DC converter 30 to increase power conversion efficiency. However, this solution has disadvantages of an enlarged size of the DC/DC converter 30 which makes it difficult to utilize and a cost increase.

Thus, the present invention proposes a power conversion apparatus capable of high-efficiency DC/DC conversion with low capacity without requiring any additional component of high specifications.

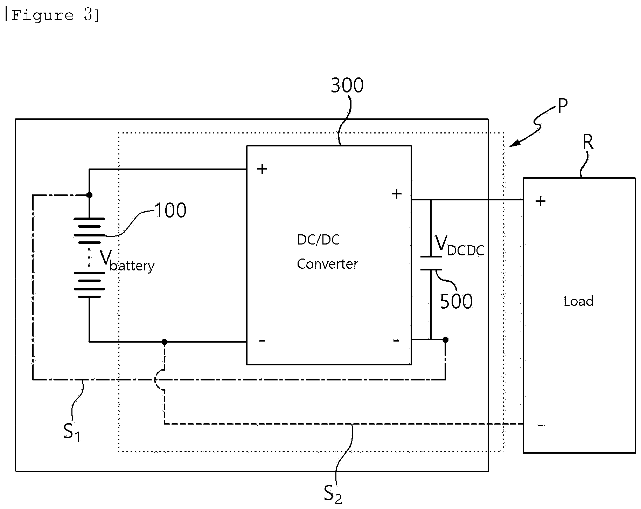

An apparatus for converting power according to embodiments of the present invention will be described in more detail with reference to FIG. 3 below.

FIG. 3 is a circuit diagram of a power converting apparatus according to embodiments of the present invention.

Referring to FIG. 3, a power converting apparatus P according to embodiments of the present invention may be a device that converts power between a battery 100 and a load R. For example, the power converting apparatus P may be applied to an energy storage system (ESS). Here, the load R may be a power conversion system.

More specifically, the power converting apparatus P may include a battery 100, a DC/DC converter 300 and a capacitor 500.

The battery 100 may be a device for storing power and may be provided with the same configuration as a typical battery. For example, the battery 100 may include any one of a battery pack, a battery rack, and a battery cell.

The battery 100 may be connected to an input of a DC/DC converter 300 to be described later and deliver a first voltage $V_{battery}$ to the DC/DC converter 300 .

In addition, the battery 100 may include a positive terminal connected to an output of the DC/DC converter 300 through a first connection $S_1$ and a negative terminal connected to a load R through a second connection $S_2$. Accordingly, the battery 100 may directly deliver the output of the battery 100 together with the output of the DC/DC converter 300 to the load R.

The first connection $S_1$ and the second connection $S_2$ will be described in more detail when the DC/DC converter 300 is described below.

The DC/DC converter 300 may be provided as a bidirectional converter, like a typical DC/DC converter described above, and may be connected to the battery 100 and the load R. In addition, the DC/DC converter may be an insulated converter.

In more detail, the input ($P_{Input}$) of the DC/DC converter 300 may be connected to the output of the battery 100. Accordingly, the DC/DC converter 300 may obtain a second voltage $V_{DCDC}$ by boosting a first voltage $V_{battery}$ output from the battery 100 to a specific voltage level as shown in Equation 2 below.

Meanwhile, the output $P_{Output}$ of the DC/DC converter 300 may be connected to the load R through the battery 100.

According to an embodiment, the positive output of the DC/DC converter 300 may be connected to the positive terminal of the load R.

In addition, the negative output of the DC/DC converter 300 may be connected to the negative terminal of the load R through the input/output of the battery 100 by the first connection $S_1$ and the second connection $S_2$.

More specifically, as described above, the first connection S1 may connect the negative terminal of the DC/DC converter 300 and the positive terminal of the battery 100.

In addition, the second connection $S_2$ may connect the negative terminal of the battery 100 and the negative terminal of the load R.

Accordingly, the DC/DC converter 300 may output a first output ($P_{DCDC}$) obtained by using a boosted second voltage $V_{DCDC}$ and a second output ($P_{battery}$) obtained by using the first voltage ($V_{battery}$) of the battery through the first connection ($S_1$) and the second connection ($S_2$) and transmit the first output and the second output to the load (R) (see Equation 2).

[Equation 2]

$$P_{Input} : V_{battery} \times I$$

$$P_{Output} : P_{DCDC} + P_{battery} = (V_{battery} \times I) + (V_{DCDC} \times I)$$

Here, $P_{Input}$ is the input of the DC/DC converter 300, $P_{Output}$ is the output of the DC/DC converter 300, $V_{battery}$ is the first voltage that is the input of the battery 100, $V_{DCDC}$ may be the second voltage that is an output voltage boosted by the DC/DC converter (300).

Furthermore, $P_{DCDC}$ may be a first output according to the second voltage of the DC/DC converter 300, and $P_{battery}$ may be a second output according to the first voltage of the DC/DC converter 300.

Here, the sum of the first output $P_{DCDC}$ and the second output $P_{battery}$ may be equal to a target power value required from the load R.

As described above, a typical DC/DC converter 30 boosts the voltage $V_{battery}$ output from the battery 10 to a target voltage level required by the load R to output the target power value $P_{Output}$.

However, the DC/DC converter 300 according to embodiments of the present invention takes a consideration of the second output $P_{battery}$ obtained from the battery 100 and need to obtain only the first output ($P_{DCDC} = P_{Output} - P_{battery}$) derived by excluding the second output from a target power value required from the load R. Thus, the power conversion efficiency of the present invention can be improved by minimizing a boosting degree of the first voltage which is an input voltage, compared to a typical DC/DC converter.

The capacitor 500 may be connected to the output of the DC/DC converter 300. Accordingly, the capacitor 500 may accumulate charges flowing through the DC/DC converter 300. For example, the capacitor 500 may provide a value of current (I) flowing the DC/DC converter 300 as in Equation 2.

A power converting apparatus performing DC/DC conversion according to embodiments of the present invention and an energy storage system including the same have been described.

Hereinafter, power conversion efficiency of a power converting apparatus of the present invention according to an experimental example compared to a typical DC/DC converter according to a comparative example will be described.

Power converting apparatus compared to a conventional DC/DC converter based on experimental examples of the present invention and comparative examples

As an experimental example of the present invention, a power converting apparatus was prepared in which a battery voltage of 200V is boosted to 400V as output through DC/DC conversion for the remaining power derived by excluding power obtained from a battery whose output voltage is 200V from the input power required from a load.

In addition, as a comparative example for measuring power efficiency of a power conversion device, a conventional DC/DC converter was prepared through which the output voltage of 200V of a battery is boosted to 400V by only DC/DC conversion to output power in order to output power required from the load.

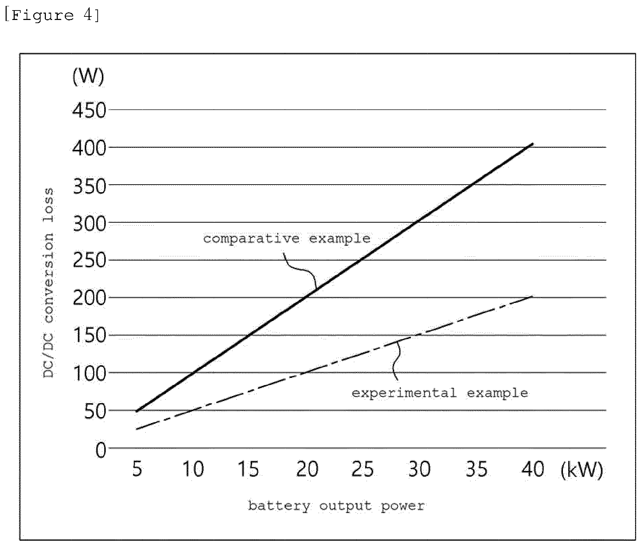

FIG. 4 is a graph comparing DC/DC conversion losses of battery output powers between a power converting apparatus according to the experimental example of the present invention and the conventional DC/DC converter.

Referring to FIG. 4, it is shown that the higher the output power of the battery, the higher the DC/DC conversion loss of the power converting apparatus according to the experimental example of the present invention and the DC/DC converter according to the comparative example.

In addition, it can be confirmed that the magnitude of power (watt, W) of the DC/DC conversion loss of the power converting apparatus according to the experimental example of the present invention is smaller than that of the conventional DC/DC converter.

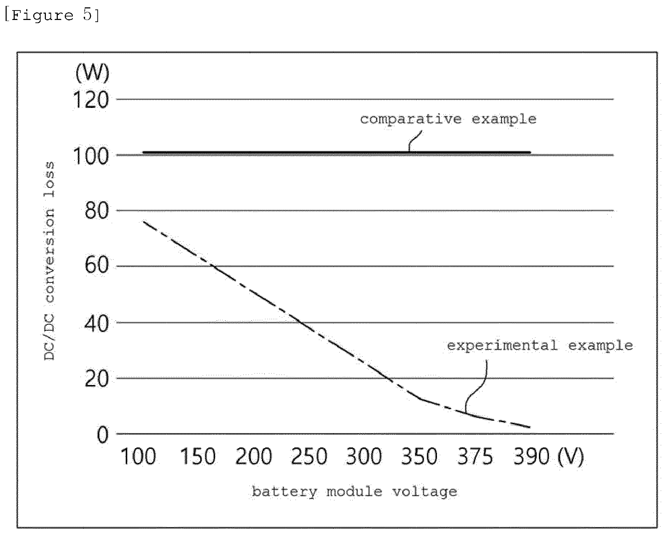

FIG. 5 is a graph comparing the DC/DC conversion losses of battery output voltages according to a power converter according to an experimental example of the present invention and a conventional DC/DC converter.

Referring to FIG. 5, in the case of the conventional DC/DC converter as the comparative example, a constant DC/DC conversion loss occurs regardless of the magnitude of the output voltage of the battery, whereas the power converting apparatus according to the experimental example of the present invention shows that the larger the output voltage, the lower the DC/DC conversion loss. In other words, since a part of the power required from the load is replaced by the output power of the battery, the output power of the power converting apparatus to be output by DC/DC conversion decreases as the magnitude of the output voltage of the battery increases, thereby reducing DC/DC conversion loss.

In the above, a power converting apparatus performing DC/DC conversion and an energy storage system including the same according to embodiments of the present invention have been described.

A power converting apparatus performing DC/DC conversion and an energy storage system including the same according to embodiments of the present invention may comprise: a set of batteries; and a DC/DC converter including an input connected to an output of the battery, wherein a positive output terminal of the DC/DC converter is connected to a load, wherein a negative output terminal of the DC/DC converter is connected to a positive terminal of the set of batteries, and wherein a negative terminal of the battery is connected to the load, thereby receiving at least a portion of the power required by the load directly from the battery without passing through the DC/DC converter. Thus, compared to a conventional DC/DC converter that acquires all the power required by the load from the battery and converts it through DC/DC conversion, the embodiments of the present invention by which the voltage level to be boosted is lowered and power conversion efficiency increases, provides a high-efficiency and low-cost power converting apparatus with reduced volume and reduced cost and an energy storage system including the same because no additional configuration is required for power conversion efficiency.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include a hardware device, such as a ROM, a RAM, and a flash memory, specially configured to store and execute program instructions. The program instructions may include not only machine language codes such as those generated by a compiler, but also high-level language codes that can be executed by a computer by using an interpreter or the like.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

**Claims**

1.　A power converting apparatus, comprising:

　　a set of batteries; and
　　a DC/DC converter including an input connected to an output of the set of batteries,
　　wherein a positive output terminal of the DC/DC converter is connected to a load,
　　wherein a negative output terminal of the DC/DC converter is connected to a positive terminal of the set of batteries, and
　　wherein a negative terminal of the set of batteries is connected to the load.

2.　The apparatus of claim 1, wherein a sum of a first output of the DC/DC converter and a second output of the set of batteries is input to the load.

3.　The apparatus of claim 2, wherein the sum of the first output and the second output is equal to a target power required by the load.

4.　The apparatus of claim 2, wherein the DC/DC converter is configured to DC/DC convert a voltage input from the set of batteries and boost it to a target voltage level to obtain the first output.

5.　The apparatus of claim 1, further comprising a capacitor connected to the output of the DC/DC converter to accumulate at least one charge flowing in the DC/DC converter.

6.　The apparatus of claim 1, wherein a battery included in the set of batteries includes one of a battery pack, a battery rack, and a battery cell.

7.　The apparatus of claim 1, wherein the load is a power conversion system (PCS).

8.　The apparatus of claim 1, wherein the power converting apparatus is included in an energy storage system.

9.　An energy storage system, comprising:

　　a power converting apparatus including a set of batteries and a DC/DC converter including an input connected to an output of the set of batteries; and
　　a power conversion system connected to the power converting apparatus and a load and configured to convert a DC output from the power converting apparatus into an AC output in accordance with the load,
wherein a positive output terminal of the DC/DC converter is connected to the load,
wherein a negative output terminal of the DC/DC converter is connected to a positive terminal of the set of batteries, and
wherein a negative terminal of the set of batteries is connected to the load.

[Figure 1]

[Figure 2]

[Figure 3]

[Figure 4]

[Figure 5]

## INTERNATIONAL SEARCH REPORT

| International application No. |
| --- |
| **PCT/KR2022/015583** |

| | |
| --- | --- |
| **A.** | **CLASSIFICATION OF SUBJECT MATTER** |

**H02J 7/00**(2006.01)i; **H02J 3/32**(2006.01)i; **H02M 3/335**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H02J 7/00(2006.01); B60L 11/18(2006.01); B60L 3/00(2006.01); B60R 16/03(2006.01); H01M 10/42(2006.01); H02M 1/00(2007.01); H02M 3/155(2006.01); H02M 3/158(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전력 변환 장치(power converting apparatus), 음극(cathode), 양극(anode), 부하(load), 배터리(battery)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2010-284064 A (TOYOTA INDUSTRIES CORP.) 16 December 2010 (2010-12-16)<br>See paragraphs [0016]-[0019]; and figure 1. | 1-9 |
| A | KR 10-1855451 B1 (HLB POWER CO., LTD.) 04 May 2018 (2018-05-04)<br>See paragraphs [0050]-[0052]; and figure 1. | 1-9 |
| A | KR 10-2016-0019237 A (CHO, Ju Hyun) 19 February 2016 (2016-02-19)<br>See paragraphs [0022]-[0032]; and figure 1. | 1-9 |
| A | WO 2021-209613 A1 (LITHIUM BALANCE A/S) 21 October 2021 (2021-10-21)<br>See entire document. | 1-9 |
| A | JP 11-299121 A (NEC CORP.) 29 October 1999 (1999-10-29)<br>See entire document. | 1-9 |

| ☐ Further documents are listed in the continuation of Box C. | ☑ See patent family annex. |
| --- | --- |

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **13 February 2023** | **13 February 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2022/015583** |

| Patent document cited in search report | | | Publication date (day/month/year) | Patent family member(s) | | | Publication date (day/month/year) |
| --- | --- | --- | --- | --- | --- | --- | --- |
| JP | 2010-284064 | A | 16 December 2010 | JP | 5749423 | B2 | 15 July 2015 |
| KR | 10-1855451 | B1 | 04 May 2018 | KR | 10-2017-0054312 | A | 17 May 2017 |
| KR | 10-2016-0019237 | A | 19 February 2016 | None | | | |
| WO | 2021-209613 | A1 | 21 October 2021 | KR | 10-2023-0004649 | A | 06 January 2023 |
| JP | 11-299121 | A | 29 October 1999 | JP | 3168978 | B2 | 21 May 2001 |
| | | | | US | 6064185 | A | 16 May 2000 |

Form PCT/ISA/210 (patent family annex) (July 2022)

**EP 4 333 247 A1**